# EUROPEAN PATENT SPECIFICATION

(11) **EP 3 010 187 B1**
(45) Date of publication and mention of the grant of the patent: **25.09.2019**
(21) Application number: 15189257.7
(22) Date of filing: 12.10.2015
(51) Int. Cl.: H04L 12/771

(54) **METHOD FOR UPGRADING AND DEVICE AND APPARATUS THEREOF**
VERFAHREN ZUR AUFRÜSTUNG SOWIE VORRICHTUNG UND EINRICHTUNG DAFÜR
PROCÉDÉ DE VALORISATION ET DISPOSITIF ET APPAREIL CORRESPONDANT

(30) Priority: 16.10.2014 CN 201410550394
(43) Date of publication of application: 20.04.2016
(73) Proprietor: Xiaomi Inc., Beijing 100085 (CN)
(72) Inventor: FAN, Jialin, Beijing 100085 (CN); XIA, Yongfeng, Beijing 100085 (CN); LIU, Tiejun, Beijing 100085 (CN)
(74) Representative: Delumeau, François Guy

(56) References cited:
- WO-A1-2009/036792
- US-A1- 2006 056 370
- US-A1- 2010 169 937

## Description

### TECHNICAL FIELD

The present disclosure relates to the field of computer technology, and more particularly, to a method for upgrading and a device and an apparatus thereof.

### BACKGROUND

With the rapid development of technology, portable routers have gradually entered people's life. A portable router usually has a built-in SIM (Subscriber Identity Module) card, and establishes a data link such as GPRS (General Packet Radio Service) or GSM (Global System for Mobile Communication) or the like, to Ethernet via the SIM card, and also wirelessly connects to a terminal, thereby the portable router may provide data service for the terminal, that is to say, the terminal may get on the Internet via a wireless router.

However, in order to work normally, portable routers must have operating systems. During the development of technology, and in order to optimize the operating systems of the portable routers, equipment manufacturers will gradually introduce some new versions of operating systems containing new functions. Therefore, in order to optimize the portable routers, the operating systems of the portable routers are often required to be upgraded.

In the related art, when a portable router needs to upgrade a current version of operating system to a new version of operating system, firstly, the portable router should download an upgrade package from a server by using the data link established to Ethernet, and then upgrade the current version of operating system to the new version of operating system by using the upgrade package.

However, in normal circumstances, the upgrade package has a large volume, and the data link such as GPRS or GSM has poor stability, which results in that a lot of network flow and time are required for the portable router to download the upgrade package based on the data link such as GPRS or GSM, and costs of the upgrading are high.

Documents WO 2009/036792 and US 2006/056370 disclose networks using routers.

### SUMMARY

In order to overcome the problems existing in the related art, the present invention provides a method for upgrading and a device and an apparatus thereof.

According to a first aspect of embodiments of the present disclosure, there is provided a method for upgrading, the method is applied to a terminal, the terminal communicates with at least two router apparatuses, and the terminal interacts with a server through a communication link between any one of the router apparatuses and the server, and the method includes:
detecting whether an application in a first router apparatus of the at least two router apparatuses needs to be upgraded;
when the application in the first router apparatus needs to be upgraded, acquiring an upgrade file necessary for the application to be upgraded through a communication link between a second router apparatus of the at least two router apparatuses and the server; and
sending the upgrade file to the first router apparatus, such that the first router apparatus upgrades the application by using the upgrade file.

In an embodiment, detecting whether the application in the first router apparatus of the at least two router apparatuses needs to be upgraded includes:
acquiring a current version identifier of the application, wherein the version identifier includes at least a version number and/or version generation time;
sending the current version identifier to the server through the communication link between any one of the router apparatuses and the server;
receiving a looking up result sent after the server looks up whether a version to be upgraded exists according to the current version identifier; and
when the looking up result is that the version to be upgraded exists, determining that the application needs to be upgraded, and when the looking up result is that the version to be upgraded does not exist, determining that the application does not need to be upgraded.

In an embodiment, detecting whether the application in the first router apparatus of the at least two router apparatuses needs to be upgraded includes:
acquiring a current version identifier of the application, wherein the version identifier includes at least a version number and/or version generation time;
acquiring a version identifier of the version to be upgraded of the application according to the current version identifier;
comparing the version identifier of the version to be upgraded with the current version identifier; and
when the version identifier of the version to be upgraded is higher than the current version identifier, determining that the application needs to be upgraded; and when the version identifier of the version to be upgraded is lower than or equal to the current version identifier, determining that the application does not need to be upgraded.

In an embodiment, acquiring the version identifier of the version to be upgraded of the application according to the current version identifier includes:
sending the current version identifier to the server through the communication link between any one of the router apparatuses and the server; and
receiving the version identifier of the version to be upgraded which corresponds to the application, sent from the server and looked up according to the current version identifier.

In an embodiment, acquiring the upgrade file necessary for the application in the first router apparatus to be upgraded through the communication link between the second router apparatus of the at least two router apparatuses and the server includes:
detecting whether the terminal interacts with the server through the communication link between the second router apparatus and the server;
when the terminal interacts with the server, generating an acquiring request for acquiring the upgrade file necessary for the application to be upgraded;
sending the acquiring request to the server through the communication link between the second router apparatus and the server; and
receiving the upgrade file sent from the server according to the acquiring request.

In an embodiment, the method further includes:
detecting whether the terminal interacts with the server through a communication link between the first router apparatus and the server; and
when the terminal interacts with the server, performing the step of sending the upgrade file to the first router apparatus.

In combination with the first aspect, in a sixth possible implementation of the first aspect, the method further includes:
generating an initiating upgrade prompt according to the upgrade file;
determining whether an upgrade operation which is input according to the initiating upgrade prompt is received; and
when the upgrade operation is received, performing the step of sending the upgrade file to the first router apparatus.

In an embodiment, the method further includes:
determining whether the application is successfully upgraded;
when the application is successfully upgraded, generating a successful upgrade prompt; and
presenting the successful upgrade prompt.

In an embodiment, presenting the successful upgrade prompt includes:
displaying the successful upgrade prompt in a local display interface of the terminal; or
pushing the successful upgrade prompt to a preset terminal, such that the successful upgrade prompt is displayed on the preset terminal.

According to a second aspect of the embodiments of the present invention, there is provided a terminal for upgrading, the terminal communicates with at least two router apparatuses, the terminal interacts with a server through a communication link between any one of the router apparatuses and the server, and the terminal includes:
a first detection module, configured to detect whether an application in a first router apparatus of the at least two router apparatuses needs to be upgraded;
an acquiring module, configured to, when the application in the first router apparatus needs to be upgraded, acquire an upgrade file necessary for the application to be upgraded through a communication link between a second router apparatus of the at least two router apparatuses and the server; and
a sending module, configured to send the upgrade file to the first router apparatus, such that the first router apparatus upgrades the application by using the upgrade file.

In an embodiment, the first detection module includes:
a first acquiring unit, configured to acquire a current version identifier of the application, wherein the version identifier includes at least a version number and/or version generation time;
a first sending unit, configured to send the current version identifier to the server through the communication link between any one of the router apparatuses and the server;
a first receiving unit, configured to receive a looking up result sent after the server looks up whether a version to be upgraded exists according to the current version identifier; and
a first determination unit, configured to, when the looking up result is that the version to be upgraded exists, determine that the application needs to be upgraded, and when the looking up result is that the version to be upgraded does not exist, determine that the application does not need to be upgraded.

In an embodiment, the first detection module includes:
a second acquiring unit, configured to acquire a current version identifier of the application, wherein the version identifier includes at least a version number and/or version generation time;
a third acquiring unit, configured to acquire a version identifier of the version to be upgraded of the application according to the current version identifier;
a comparison unit, configured to compare the version identifier of the version to be upgraded with the current version identifier;
a second determination unit, configured to, when the version identifier of the version to be upgraded is higher than the current version identifier, determine that the application needs to be upgraded; and when the version identifier of the version to be upgraded is lower than or equal to the current version identifier, determine that the application does not need to be upgraded.

In an embodiment, the third acquiring unit includes:
a sending subunit, configured to send the current version identifier to the server through the communication link between any one of the router apparatuses and the server; and
a receiving subunit, configured to receive the version identifier of the version to be upgraded which corresponds to the application, sent from the server and looked up according to the current version identifier.

In an embodiment, the acquiring module includes:
a detection unit, configured to detect whether the terminal interacts with the server through the communication link between the second router apparatus and the server;
a generation unit, configured to, when the terminal interacts with the server, generate an acquiring request for acquiring the upgrade file necessary for the application to be upgraded;
a second sending unit, configured to send the acquiring request to the server through the communication link between the second router apparatus and the server; and
a second receiving unit, configured to receive the upgrade file sent from the server according to the acquiring request.

In an embodiment, the terminal further includes:
a second detection module, configured to detect whether the terminal interacts with the server through a communication link between the first router apparatus and the server,
wherein the sending module is further configured to, when the terminal interacts with the server, send the upgrade file to the first router apparatus.

In an embodiment, the terminal further includes:
a first generation module, configured to generate an initiating upgrade prompt according to the upgrade file; and
a first determination module, configured to determine whether an upgrade operation which is input according to the initiating upgrade prompt is received,
wherein the sending module is further configured to, when the upgrade operation is received, perform the step of sending the upgrade file to the first router apparatus.

In an embodiment, the terminal further includes:
a second determination module, configured to determine whether the application is successfully upgraded;
a second generation module, configured to, when the application is successfully upgraded, generate a successful upgrade prompt; and
a presenting module, configured to present the successful upgrade prompt.

In an embodiment, the presenting module includes:
a presenting unit, configured to display the successful upgrade prompt in a local display interface of the terminal;
a pushing unit, configured to push the successful upgrade prompt to a preset terminal, such that the successful upgrade prompt is displayed on the preset terminal.

According to a third aspect of the embodiments of the present invention, there is provided an apparatus for upgrading, the apparatus includes:
a processor; and
a memory for storing instructions executable by the processor,
wherein the processor is configured to:
   detect whether an application in a first router apparatus of the at least two router apparatuses needs to be upgraded;
   when the application in the first router apparatus needs to be upgraded, acquire an upgrade file necessary for the application to be upgraded through a communication link between a second router apparatus of the at least two router apparatuses and the server; and
   send the upgrade file to the first router apparatus, such that the first router apparatus upgrades the application by using the upgrade file.

According to a fourth aspect of the embodiments of the present invention, there is provided a computer program, which when executed on a processor of a terminal for upgrading, performs a method according to the first aspect of embodiments of the present invention.

This program can use any programming language and take the form of source code, object code or a code intermediate between source code and object code, such as a partially compiled form, or any other desirable form.

The technical solutions provided by the embodiments of the present invention may include the following advantageous effects: in the present invention, it is detected whether an application in a first router apparatus needs to be upgraded; when the application in the first router apparatus needs to be upgraded, an upgrade file necessary for the application to be upgraded is acquired from the server through a second communication link; and the upgrade file is sent to the first router apparatus, such that the first router apparatus upgrades the application by using the upgrade file.

The terminal acquires the upgrade file through the second communication link between a second router apparatus and the server, rather than a first communication link between the first router apparatus and the server, thus flow of a communication card in the first router apparatus are not consumed (i.e. the flow of data using the communication card which can be a SIM card); and the terminal is connected to the first router apparatus via inner network, the flow of the communication card in the first router apparatus is not consumed in the process for interacting therebetween either, that is to say, the sending the upgrade file to the first router apparatus does not consume the flow of the communication card in the first router apparatus.

In this way, compared to the related art, in the embodiments of the present invention, the terminal changes the link, through which the upgrade file is acquired from the server, from the first communication link to the second communication link. Therefore, the first communication link is not used in the whole process, thus the flow of the communication card in the first router apparatus is saved.

It should be understood that both the above general description and the following detailed description are illustrative and explanatory, which do not limit the present invention.

### BRIEF DESCRIPTION OF THE DRAWINGS

The accompanying drawings, which are incorporated into and constitute a part of this specification, illustrate embodiments being consistent with the invention and, together with the description, serve to explain the principles of the invention.
Fig. 1 is a diagram illustrating a system according to an exemplary embodiment.
Fig. 2 is a flowchart showing a method for upgrading according to another exemplary embodiment.
Fig. 3 is a flowchart showing a method for upgrading according to still another exemplary embodiment.
Fig. 4 is a flowchart showing a method for upgrading according to yet another exemplary embodiment.
Fig. 5 is a flowchart showing a method for upgrading according to yet still another exemplary embodiment.
Fig. 6 is a diagram illustrating a scene according to another exemplary embodiment.
Fig. 7 is a block diagram illustrating a device for upgrading according to another exemplary embodiment.
Fig. 8 is a block diagram illustrating an apparatus for upgrading according to another exemplary embodiment.

### DETAILED DESCRIPTION

Exemplary embodiments will be described in details herein, with examples thereof shown in drawings. In the following descriptions, when the drawings are referred to, unless expressed otherwise, the same number in different drawings refers to the same or similar elements. The implementary manners described in the exemplary embodiments below do not represent all implementary manners that are consistent with the present invention. On the contrary, they are only examples of devices and methods that are consistent with some aspects of the present invention as recited in the claims.

In an embodiment of the present disclosure, a terminal may communicate with at least two router apparatuses, and the terminal may interact with a server through a communication link between any one of the router apparatuses and the server. In addition, a router apparatus refer to an apparatus that has a routing-transfer function, for example a router, a cellphone that is set as a hotspot, or the like.

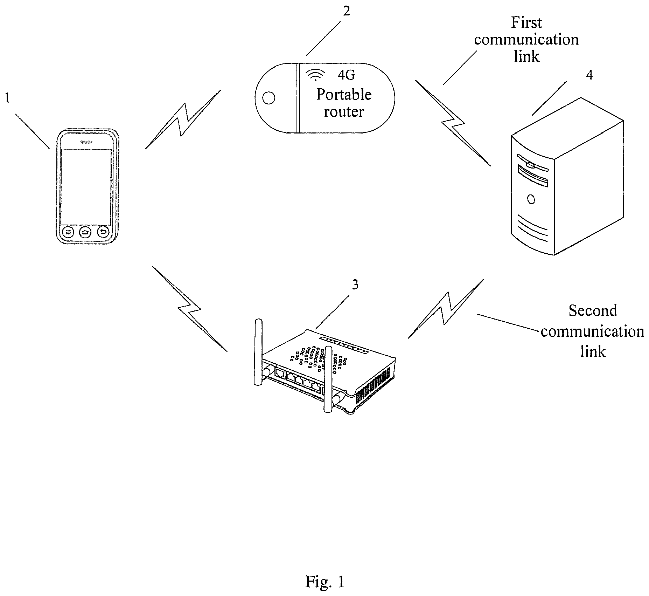

Fig. 1 is a diagram illustrating a system according to an exemplary embodiment. As shown in Fig. 1, the system includes a terminal 1, a first router apparatus 2, a second router apparatus 3 and a server 4. Although Fig. 1 shows two router apparatuses, embodiments consistent with the present disclosure can include greater or fewer router apparatuses.

As shown in Fig. 1, the terminal 1 is wirelessly connected to the first router apparatus 2 and the second router apparatus 3, respectively. The first router apparatus 2 and the second router apparatus 3 are connected to the server 4 respectively. The first router apparatus 2 is wirelessly connected to the server 4, and a first communication link is provided between the first router apparatus 2 and the server 4. The second router apparatus 3 is connected to the server 4 via an optical fiber or through a broadband, and a second communication link is provided between the second router apparatus 3 and the server 4. The terminal 1 may interact with the server 4 through the first communication link, or through the second communication link.

In some embodiments, the first router apparatus 2 includes a portable router, and the second router apparatus 3 includes a wireless router of a different type, such as an ordinary, non-portable wireless router. The first router apparatus 2 has a built-in communication card, such as a SIM card. The first communication link between the first router apparatus 2 and the server 4 is established via the SIM card. In some scenarios, the communication through the first communication link is more expensive than that through the second communication link.

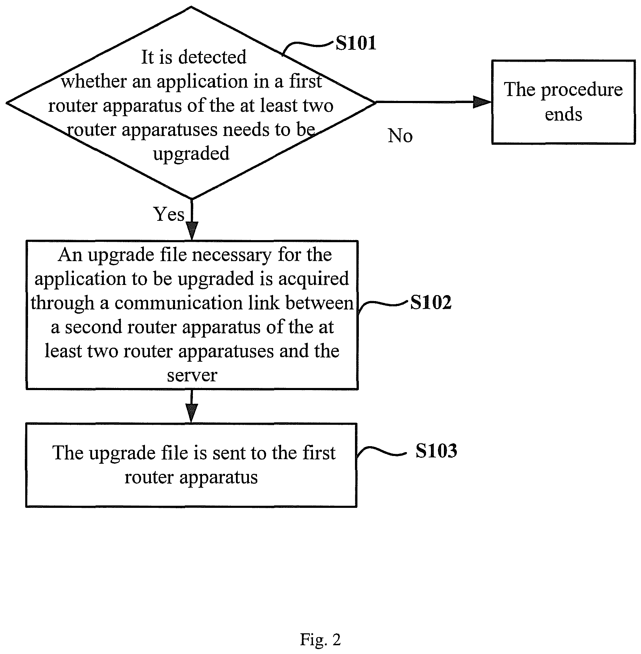

Fig. 2 is a flowchart showing a method for upgrading according to an exemplary embodiment. As shown in Fig. 2, the method is applied to the terminal 1, and the method for upgrading includes the following steps.

In step S101, it is detected whether an application in the first router apparatus of the at least two router apparatuses needs to be upgraded.

In an embodiment of the present disclosure, the first router apparatus 2 is described as a portable router, and the second router apparatus 3 is described as an ordinary wireless router, both of which do not limit the protection scope of the present disclosure.

In order to make users conveniently access to the Internet while a WiFi (Wireless Fidelity) does not exist, a portable router usually has a built-in communication card, wherein the communication card may be a SIM card or the like. The portable router establishes a first communication link between itself and the server 4 via the SIM card, and the terminal 1 may be connected to the portable router and interact with the server 4 through the first communication link. However, the users are often required to pay for flow of the communication card based on the amount of the flow or pay for monthly, and fees of both are often relatively high, compared with accessing a usual WiFi of a broadband. Therefore users wish to consume most of flow of the portable router on web page browsing, and minimize operations, such as application upgrade, that are not related to web page browsing and require much more flow, to make those operations not consume the flow of the communication card in the portable router, so as to improve utilization of the flow of the communication card in the portable router.

An ordinary wireless router may establish a second communication link between itself and the server 4 through the broadband or via an optical fiber. Since there is no flow limitation on the broadband or the optical fiber, and use fees are extremely low.

In this step of the embodiment of the present disclosure, an application in the portable router may be detected when the terminal 1 communicates with the portable router.

The application may be software in the first router apparatus, or may be an operating system of the first router apparatus.

If the application needs to be upgraded, step S102 is performed; and if the application does not need to be upgraded, the procedure ends.

When the application in the first router apparatus needs to be upgraded, in the step S102, an upgrade file necessary for the application to be upgraded is acquired through a communication link between a second router apparatus of the at least two router apparatuses and the server. Otherwise, the procedure ends.

In this step, the terminal 1 may initiatively access to the server 4 through the first communication link or the second communication link, and when it is determined that the application in the first router apparatus 2 needs to be upgraded, the upgrade file for upgrading a current version of the application to a version to be upgraded is requested to be acquired from the server 4. Furthermore, the server 4 may also initiatively push an upgrade message to the terminal 1, and then the terminal 1 according to the upgrade message makes a request for acquiring the upgrade file for upgrading the current version of the application to the version to be upgraded from the server 4.

In step S103, the upgrade file is sent to the first router apparatus.

When it is detected that the terminal 1 is connected to the first router apparatus 2, the upgrade file is sent to the first router apparatus 2; and the first router apparatus 2 receives the upgrade file, and upgrades the current version of the application to the version to be upgraded by using the upgrade file.

In the embodiment shown in Fig. 2, it is detected whether the application in the first router apparatus 2 needs to be upgraded; when the application in the first router apparatus 2 needs to be upgraded, the upgrade file necessary for the application to be upgraded is acquired from the server 4 through the second communication link; and the upgrade file is sent to the first router apparatus 2, such that the first router apparatus 2 upgrades the application by using the upgrade file.

The terminal 1 acquires the upgrade file through the second communication link between the second router apparatus 3 and the server 4, rather than the first communication link between the first router apparatus 2 and the server 4, thus the flow of the communication card in the first router apparatus 2 are not consumed; and the terminal 1 is connected to the first router apparatus 2 via an inner network, the flow of the communication card in the first router apparatus 2 is not consumed in the process for interacting therebetween either, that is to say, the sending the upgrade file to the first router apparatus 2 does not consume the flow of the communication card in the first router apparatus 2.

In this way, compared to the related art, in the embodiment of the present disclosure, the terminal 1 changes the link, through which the upgrade file is acquired from the server 4, from the first communication link to the second communication link. Therefore, the first communication link is not used in the whole process, thus the flow of the communication card in the first router apparatus 2 is saved.

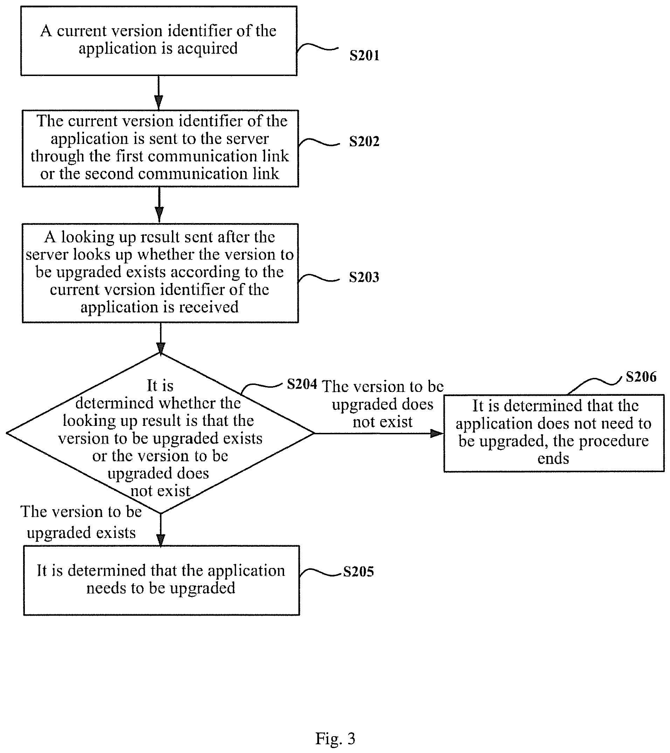

In another alternative embodiment of the present disclosure, as shown in Fig. 3, the step S101 may be implemented by the following steps of S201 to S206.

In step S201, a current version identifier of the application is acquired.

The version identifier includes at least a version number and/or version generation time.

In this step, the terminal 1 may acquire the current version identifier of the application from the first router apparatus 2.

In step S202, the current version identifier of the application is sent to the server through the first communication link or the second communication link.

In this step, the terminal 1 generates a version detection request of the application, and sends the version detection request to the server 4 through the first communication link or the second communication link, wherein the version detection request carries the current version identifier of the application.

The server 4 receives the version detection request, extracts the current version identifier of the application in the version detection request, acquires a version identifier of the latest version of the locally stored application as a version identifier of the version to be upgraded of the application, and compares the version identifier of the version to be upgraded of the application with the current version identifier of the application; that is to say, the server 4 compares values of the version number of the version to be upgraded of the application with the current version number of the application, or compares version generation time of the version to be upgraded of the application with the current version generation time of the application.

If the version number of the version to be upgraded of the application is greater than the current version number of the application, or the version generation time of the version to be upgraded of the application is later than the current version generation time of the application, it is determined that the application needs to be upgraded; then a looking up result that the version to be upgraded of the application exists is generated, and the looking up result is sent to the terminal 1.

If the version number of the version to be upgraded of the application is smaller than or equal to the current version number of the application, or the version generation time of the version to be upgraded of the application is earlier than or same as the current version generation time of the application, it is determined that the application does not need to be upgraded; then a looking up result that the version to be upgraded of the application does not exist is generated, and the looking up result is sent to the terminal 1.

In an embodiment of the present invention, this step may be classified into two situations.

In one situation, in the process for interacting with the server 4 through the first communication link, the terminal 1 may firstly send the version detection request of the application to the server 4 through the first communication link, to determine whether the application needs to be upgraded. Then, it is detected whether the terminal 1 may interact with the server 4 through the second communication link, and when it is detected that the terminal 1 may interact with the server 4 through the second communication link, the terminal 1 directly acquires the upgrade file necessary for the application to be upgraded through the second communication link.

In the other situation, the terminal 1 firstly acquires the identifier of the application in the first router apparatus, and then it is detected whether the terminal 1 is able to interact with the server 4 through the second communication link, and when it is detected that the terminal 1 may interact with the server 4 through the second communication link, the terminal 1 sends the version detection request to the server 4 through the second communication link, to determine whether the application needs to be upgraded, and when the application needs to be upgraded, the terminal 1 directly acquires the upgrade file necessary for the application to be upgraded through the second communication link.

In step S203, a looking up result sent after the server looks up whether the version to be upgraded exists according to the current version identifier of the application is received.

In step S204, it is determined whether the looking up result is that the version to be upgraded exists or the version to be upgraded does not exist.

When the looking up result is that the version to be upgraded exists, the step S205 is performed; and when the looking up result is that the version to be upgraded does not exist, the step S206 is performed.

When the looking up result is that the version to be upgraded exists, in step S205, it is determined that the application needs to be upgraded.

When the looking up result is that the version to be upgraded does not exist, in step S206, it is determined that the application does not need to be upgraded, the procedure ends.

In practical application, it is assumed that the current version number of the application is V1.1, and the version generation time is 20130303; the version number of the version to be upgraded of the application is V1.4, and the version generation time is 20130910.

The terminal 1 acquires the current version identifier of the application from the first router apparatus 2, generates the version detection request of the application and sends it to the server 4, wherein the version detection request carries the current version identifier of the application.

The version identifier is described as the version number, i.e., the current version identifier of the application is the version number V1.1.

The server 4 receives the version detection request, extracts the current version number V1.1 of the application from the version detection request, acquires the version number V1.4 of the latest version of the locally stored application as the version number of the version to be upgraded, and compares the current version number V1.1 of the application with the version number V1.4 of the version to be upgraded of the application. Since the current version number V1.1 of the application is smaller than the version number V1.4 of the version to be upgraded of the application, it is determined that the application needs to be upgraded, then the looking up result that the version to be upgraded of the application exists is generated, and is sent to the terminal 1.

The version identifier is described as the version generation time, i.e., the current version identifier of the application is the version generation time 20130303.

The server 4 receives the version detection request, extracts the current version generation time 20130303 of the application from the version detection request, acquires the version generation time 20130910 of the latest version of the locally stored application as the version generation time of the version to be upgraded, and compares the current version generation time 20130303 of the application with the version generation time 20130910 of the version to be upgraded of the application. Since the current version generation time 20130303 of the application is earlier than the version generation time 20130910 of the version to be upgraded of the application, it is determined that the application needs to be upgraded, then the looking up result that the version to be upgraded of the application exists is generated, and is sent to the terminal 1.

The terminal 1 receives the looking up result sent from the server 4, then it is determined that the looking up result is that the version to be upgraded exists, thus it is determined that the application needs to be updated.

In an embodiment of the present invention, the terminal 1 sends a current version identifier of an application such that the server 4 detects whether the application needs to be upgraded according to the current version identifier of the application, and the terminal 1 acquires an update file for upgrading a current version of the application to a version to be upgraded whenever a looking up result that the version to be upgraded exists is received from the server 4, and upgrades the application according to the acquired upgrade file. In this way, it may ensure that the version of the application is the latest version in most time, so as to meet the requirements of the users more.

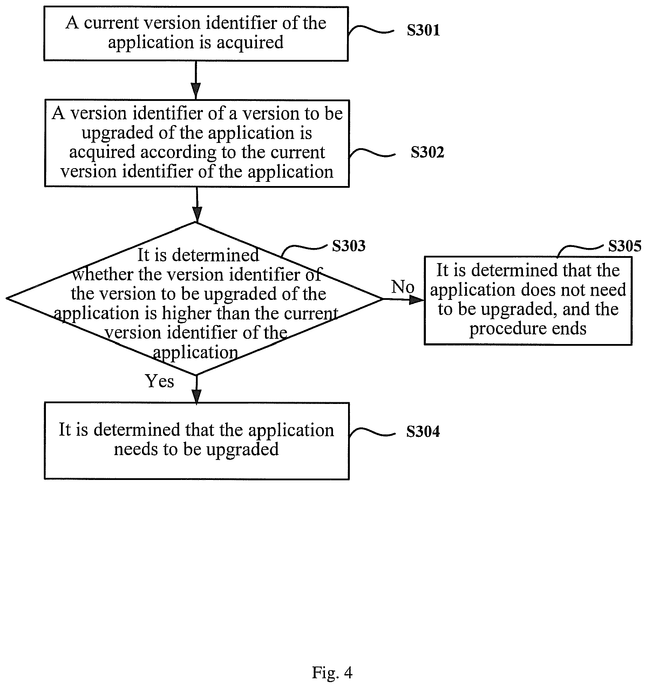

In another alternative embodiment of the present invention, as shown in Fig. 4, the step S101 may be implemented by the following steps of S301 to S305.

In step S301, a current version identifier of the application is acquired.

The version identifier includes at least a version number and/or version generation time.

In this step, the terminal 1 may acquire the current version identifier of the application from the first router apparatus 2.

In step S302, a version identifier of a version to be upgraded of the application is acquired according to the current version identifier of the application.

In this step, the terminal 1 generates a version detection request for acquiring the version to be upgraded of the application, and sends the version detection version to the server 4 through the first communication link or the second communication link.

The server 4 receives the version detection request, acquires a version identifier of the latest version of the locally stored application as the version identifier of the version to be upgraded of the application, and sends the version identifier of the version to be upgraded of the application to terminal 1.

The terminal 1 receives the version identifier of the version to be upgraded of the application sent from the server 4.

In step S303, it is determined whether the version identifier of the version to be upgraded of the application is higher than the current version identifier of the application.

In this step, the version identifier of the version to be upgraded of the application is compared with the current version identifier of the application, i.e., a version number of the version to be upgraded of the application is compared with the current version number of the application, or, version generation time of the version to be upgraded of the application is compared with the current version generation time of the application.

When the version identifier of the version to be upgraded of the application is higher than the current version identifier of the application, in step S304, it is determined that the application needs to be upgraded.

In this step, when the version number of the version to be upgraded of the application is greater than the current version number of the application, or when the version generation time of the version to be upgraded of the application is later than the current version generation time of the application, it is determined that the application needs to be upgraded.

When the version identifier of the version to be upgraded of the application is lower than or equal to the current version identifier of the application, in step S305, it is determined that the application does not need to be upgraded, and the procedure ends.

In this step, when the version number of the version to be upgraded of the application is smaller than or equal to the current version number of the application, or when the version generation time of the version to be upgraded of the application is earlier than or same as the current version generation time of the application, it is determined that the application does not need to be upgraded, and the procedure ends.

In practical application, it is assumed that the current version number of the application is V1.1, and the version generation time is 20130303; and the version number of the version to be upgraded of the application is V1.4, and the version generation time is 20130910.

The terminal 1 acquires the current version identifier of the application from the first router apparatus 2, and sends the version detection request for acquiring the version to be upgraded of the application from a user to the server 4.

The version identifier is described as the version number, i.e., the current version identifier of the application is the version number V1.1.

The server 4 receives the version detection request, acquires the version number V1.4 of the latest version of the locally stored application as the version number of the version to be upgraded of the application, and sends the version number V1.4 of the version to be upgraded of the application to the terminal 1.

The terminal 1 receives the version number V1.4 of the version to be upgraded of the application sent from the server 4, compares the current version number V1.1 of the application with the version number V1.4 of the version to be upgraded of the application. Since the current version number V1.1 of the application is smaller than the version number V1.4 of the version to be upgraded of the application, it is determined that the application needs to be upgraded.

The version identifier is described as the version generation time, i.e., the current version identifier of the application is the version generation time 20130303.

The server 4 receives the version detection request, acquires the version generation time 20130910 of the latest version of the locally stored application as the version generation time of the version to be upgraded of the application, and sends the version generation time 20130910 of the version to be upgraded of the application to the terminal 1.

The terminal 1 receives the version generation time 20130910 of the version to be upgraded of the application sent from the server 4, compares the current version generation time 20130303 of the application with the version generation time 20130910 of the version to be upgraded of the application. Since the current version generation time 20130303 of the application is earlier than the version generation time 20130910 of the version to be upgraded of the application, it is determined that the application needs to be upgraded.

In an embodiment of the present disclosure, the terminal 1 acquires a version identifier of a version to be upgraded of an application from the server 4, and detects whether the application needs to be upgraded according to a current version identifier of the application and the version identifier of the version to be upgraded, and the terminal 1 acquires an update file for upgrading a current version of the application to the version to be upgraded whenever it is detected that the application needs to be upgraded, and upgrades the application according to the acquired upgrade file. In this way, it may ensure that the version of the application is the latest version in most time, so as to meet the requirements of the users more.

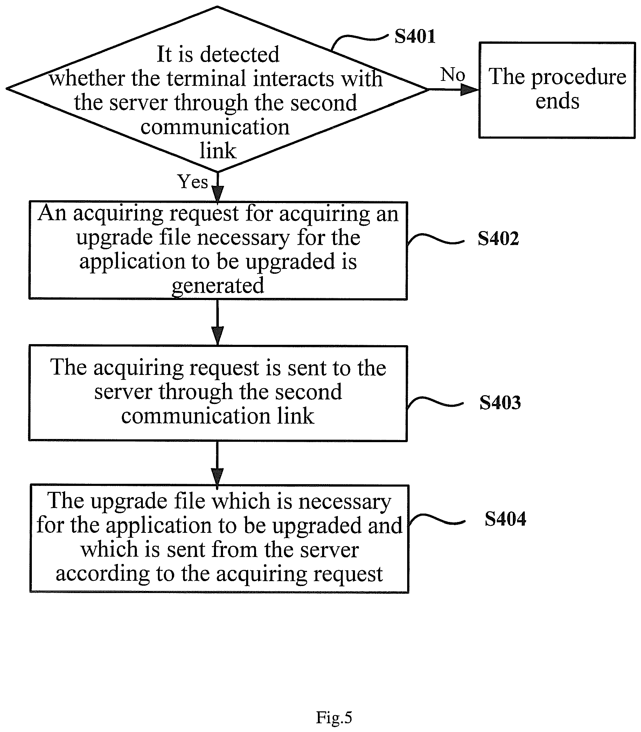

In another alternative embodiment of the present disclosure, as shown in Fig. 5, the step S102 may be implemented by the following steps of S401 to S404.

In step S401, it is detected whether the terminal may interact with the server through the second communication link.

When the terminal may interact with the server through the second communication link, in step S402, an acquiring request for acquiring an upgrade file necessary for the application to be upgraded is generated.

In this step, the acquiring request for acquiring the upgrade file is generated, wherein the upgrade file is configured to upgrade the application form a current version to a version to be upgraded, and the acquiring request carries a current version identifier of the application.

In step S403, the acquiring request is sent to the server through the second communication link.

The server 4 receives the acquiring request, extracts the current version identifier of the application from the acquiring request, acquires a version identifier of the version to be upgraded of the application from local, acquires an upgrade file for upgrading the application from the current version to the version to be upgraded according to the current version identifier of the application and the version identifier of the version to be upgraded, and sends the acquired upgrade file to the terminal 1 through the second communication link.

In step S404, the upgrade file which is necessary for the application to be upgraded and which is sent from the server according to the acquiring request is received.

The terminal 1 acquires the upgrade file through the second communication link between the second router apparatus 3 and the server 4, thus flow of a communication card in the first router apparatus 2 are not consumed; and the terminal 1 is connected to the first router apparatus 2 via an inner network, the flow of the communication card in the first router apparatus 2 is not consumed in the process for interacting therebetween either, thereby the flow of the communication card in the first router apparatus 2 is saved.

In another alternative embodiment of the present disclosure, before the step S103, the method may further include the following steps.

11), it is detected whether the terminal may interact with the server through the first communication link.

12), when the terminal may interact with the server through the first communication link, an initiating upgrade prompt is generated according to the upgrade file. Otherwise, the operation ends.

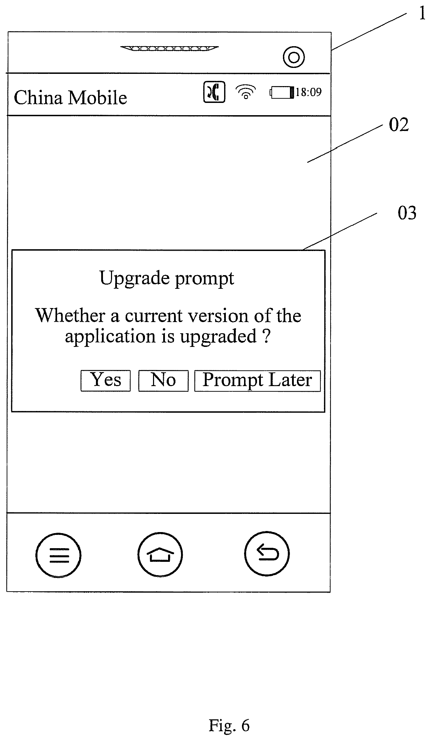

The initiating upgrade prompt may be as illustrated in Fig. 6. Fig. 6 includes a terminal 1 and a display interface 02, and in the display interface 02, the initiating upgrade prompt is presented to a user in a display manner of a pop-up frame 03. Moreover, in other embodiments, in order to be convenient for the user to operate, as shown in Fig. 6, operation control such as "yes" and "no", and "prompt later" may also be added to the pop-up frame 03, so as to conveniently make the user promptly input corresponding operations according to the initiating upgrade prompt.

The user may trigger a "yes" button in the initiating upgrade prompt illustrated in Fig. 6 to input an upgrade operation.

The initiating upgrade prompt is configured to prompt the user that upgrade may be performed, such that the user may select to instantly upgrade or upgrade later in appropriate time according to the initiating upgrade prompt. For instance, the user may select to make the terminal 1 initiate upgrade in the case where memory usage of memory resource of the terminal 1 is low.

For example, assuming that it is to upgrade an operating system of the first router apparatus 2 this time, in normal circumstances, the first router apparatus 2 will stop working in the process for upgrading the operating system, and at this time, the first communication link will be automatically disconnected; and the first router apparatus 2 may normally work only after the operating system is upgraded, and at this time, the first communication link is reconnected again.

It is assumed that the terminal 1 is interacting with the server 4 through the first communication link at this time, for example, a user is browsing a webpage on the terminal 1 through the first communication link. If the operating system of the first router apparatus 2 is to be upgraded now, the first router apparatus 2 will stop working, and the first communication link is automatically disconnected, thus in the process during which the operating system of the first router apparatus 2 is being upgraded, the user may not browse the webpage on the terminal 1 through the first communication link, and has to wait, until the operating system of the first router apparatus 2 has been upgraded, which influences the continuity of browsing the webpage for the user.

Therefore, with the initiating upgrade prompt, the user may select to trigger the first router apparatus 2 to initiate upgrading at appropriate time, for example, the user selects to trigger the first router apparatus 2 to initiate upgrading when he/she finishes browsing the webpage. In this way, it will not influence the user normally surfing the Internet, so as to increase user experience.

13), it is determined whether an upgrade operation which is input according to the initiating upgrade operation is received.

14), when the upgrade operation is received, the upgrade file is sent to the first router apparatus. Otherwise, the operation ends.

At this time, the terminal 1 is connected to the first router apparatus 2 via Local Area Network similar to Bluetooth, thus when the terminal 1 interacts with the first router apparatus 2, flow of a communication card in the first router apparatus 2 are not used, thereby the flow of the communication card in the first router apparatus 2 is saved.

In another alternative embodiment of the present disclosure, after the step S103, this method may further include the following steps:

21), it is determined whether the application is successfully upgraded.

In the embodiment of the present disclosure, after the application is upgraded, the first router apparatus restarts the application, and after the application is successfully restarted, the terminal acquires a version identifier of the restarted application from the first router apparatus, determines whether the version identifier of the restarted application is the same as a version identifier of a version to be upgraded, and if they are the same, it is determined that the application is successfully upgraded, and if it is different, it is determined that the application is not successfully upgraded, it needs to be re-upgraded.

22), when the application is successfully upgraded, a successful upgrade prompt is generated. Otherwise, the application is re-upgraded.

23), the successful upgrade prompt is presented.

When the successful upgrade prompt is presented, the following manners may be adopted: the successful upgrade prompt is displayed in a local display interface of the terminal 1; or, the successful upgrade prompt is pushed to a preset terminal such as a tablet computer, such that the successful upgrade prompt is able to be displayed in the display interface of the preset terminal; and the display interface may be a display screen. In addition, when the successful upgrade prompt is presented in the local display interface, as shown in Fig.6, it may also be presented in the manner of a pop-up frame.

In practical application, if the terminal 1, such as a cellphone or a tablet computer, is equipped with a display interface, the successful upgrade prompt may be displayed directly in the local display interface. If the terminal 1 such as a router and a switch is not equipped with a display interface, the successful upgrade prompt may be pushed to a preset terminal equipped with a display interface, such that the successful upgrade prompt may be displayed in the display interface on the preset terminal.

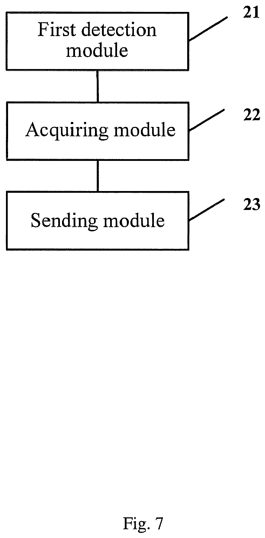

Fig. 7 is a block diagram illustrating a device for upgrading according to an exemplary embodiment. Referring to Fig. 7, the device is applied to a terminal, the terminal may communicate with at least two router apparatuses, and the terminal may interact with a server through a communication link between any one of the router apparatuses and the server. The device includes a first detection module 21, an acquiring module 22 and a sending module 23.

The first detection module 21 is configured to detect whether an application in a first router apparatus of the at least two router apparatuses needs to be upgraded.

The acquiring module 22 is configured to, when the application in the first router apparatus needs to be upgraded, acquire an upgrade file necessary for the application to be upgraded through a communication link between a second router apparatus of the at least two router apparatuses and the server.

The sending module 23 is configured to send the upgrade file to the first router apparatus, such that the first router apparatus upgrades the application by using the upgrade file.

In the embodiment shown in Fig. 7, it is detected whether an application in a first router apparatus needs to be upgraded; when the application in the first router apparatus needs to be upgraded, an upgrade file necessary for the application to be upgraded is acquired from a server through a second communication link; and the upgrade file is sent to the first router apparatus, such that the first router apparatus upgrades the application by using the upgrade file.

The terminal acquires the upgrade file through the second communication link between the second router apparatus and the server, rather than a first communication link between the first router apparatus and the server, thus flow of a communication card in the first router apparatus are not consumed; and the terminal is connected to the first router apparatus via inner network, the flow of the communication card in the first router apparatus is not consumed in the process for interacting therebetween either, that is to say, the sending the upgrade file to the first router apparatus does not consume the flow of the communication card in the first router apparatus.

In this way, compared to the related art, in the embodiments of the present disclosure, the terminal changes the link, through which the upgrade file is acquired from the server, from the first communication link to the second communication link. Therefore, the first communication link is not used in the whole process, thereby the flow of the communication card in the first router apparatus is saved.

In another alternative embodiment of the present disclosure, the first detection module 21 includes a first acquiring unit, a first sending unit, a first receiving unit and a first determination unit.

The first acquiring unit is configured to acquire a current version identifier of the application, wherein the version identifier includes at least a version number and/or version generation time.

The first sending unit is configured to send the current version identifier to the server through the communication link between any one of the router apparatuses and the server.

The first receiving unit is configured to receive a looking up result sent after the server looks up whether a version to be upgraded exists according to the current version identifier.

The first determination unit is configured to, when the looking up result is that the version to be upgraded exists, determine that the application needs to be upgraded, and when the looking up result is that the version to be upgraded does not exist, determine that the application does not need to be upgraded.

In another alternative embodiment of the present disclosure, the first detection module 21 includes a second acquiring unit, a third acquiring unit, a comparison unit and a second determination unit.

The second acquiring unit is configured to acquire a current version identifier of the application, wherein the version identifier includes at least a version number and/or version generation time.

The third acquiring unit is configured to acquire a version identifier of the version to be upgraded of the application according to the current version identifier.

The comparison unit is configured to compare the version identifier of the version to be upgraded with the current version identifier.

The second determination unit is configured to, when the version identifier of the version to be upgraded is higher than the current version identifier, determine that the application needs to be upgraded; and when the version identifier of the version to be upgraded is lower than or equal to the current version identifier, determine that the application does not need to be upgraded.

In an embodiment of the present disclosure, the third acquiring unit includes a sending subunit and a receiving subunit.

The sending subunit is configured to send the current version identifier to the server through the communication link between any one of the router apparatuses and the server.

The receiving subunit is configured to receive the version identifier of the version to be upgraded which corresponds to the application, sent from the server and looked up according to the current version identifier.

In another alternative embodiment of the present disclosure, the acquiring module 22 includes a detection unit, a generation unit, a second sending unit and a second receiving unit.

The detection unit is configured to detect whether the terminal may interact with the server through the communication link between the second router apparatus and the server.

The generation unit is configured to, when the terminal may interact with the server, generate an acquiring request for acquiring the upgrade file necessary for the application to be upgraded.

The second sending unit is configured to send the acquiring request to the server through the communication link between the second router apparatus and the server.

The second receiving unit is configured to receive the upgrade file sent from the server according to the acquiring request.

In another alternative embodiment of the present disclosure, the device further includes a second detection module.

The second detection module is configured to detect whether the terminal may interact with the server through a communication link between the first router apparatus and the server.

The sending module is further configured to, when the terminal may interact with the server, send the upgrade file to the first router apparatus.

In another alternative embodiment of the present disclosure, the device further includes a first generation module and a first determination module.

The first generation module is configured to generate an initiating upgrade prompt according to the upgrade file.

The first determination module is configured to determine whether an upgrade operation which is input according to the initiating upgrade prompt is received.

The sending module is further configured to, when the upgrade operation is received, perform the step of sending the upgrade file to the first router apparatus.

In another alternative embodiment of the present disclosure, the device further includes a second determination module, a second generation module and a presenting module.

The second determination module is configured to determine whether the application is successfully upgraded.

The second generation module is configured to, when the application is successfully upgraded, generate a successful upgrade prompt.

The presenting module is configured to present the successful upgrade prompt.

In an embodiment of the present disclosure, the presenting module includes a presenting unit and a pushing unit.

The presenting unit is configured to display the successful upgrade prompt in a local display interface of the terminal.

The pushing unit is configured to push the successful upgrade prompt to a preset terminal, such that the successful upgrade prompt is displayed on the preset terminal.

With respect to the devices in the above embodiments, the specific manners for performing operations for respective modules therein have been described in detail in the embodiments with regard to the methods, which will not be elaborated herein.

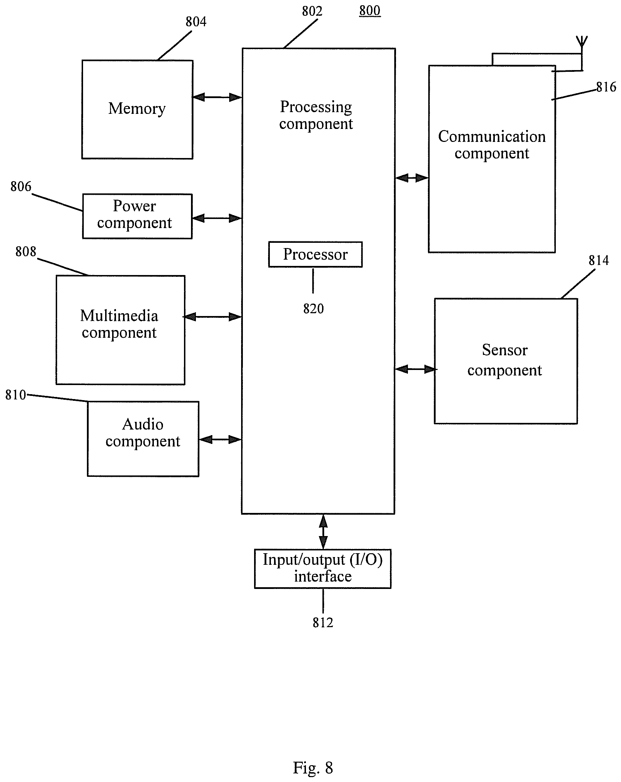

Fig. 8 is a block diagram illustrating a device 800 for upgrading, according to an exemplary embodiment. For example, the device 800 may be a mobile phone, a computer, a digital broadcast terminal, a messaging device, a gaming console, a tablet, a medical device, exercise equipment, a personal digital assistant and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 usually controls overall operations of the device 800, such as operations associated with display, telephone calls, data communications, camera operations and recording operations. The processing component 802 may include one or more processors 820 to execute instructions to perform all or a part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any application or method operated on the device 800, contact data, phonebook data, messages, pictures, videos, etc. The memory 804 may be implemented by any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the device 800. The power component 806 may include a power management system, one or more power sources, and other components associated with the generation, management, and distribution of power in the device 800.

The multimedia component 808 includes a screen for providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and/or the rear camera may receive external multimedia data while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button, and the like. The button may include, but not limited to: a home button, a volume button, a starting button and a locking button.

The sensor component 814 includes one or more sensors to provide status assessments of various aspects of the device 800. For instance, the sensor component 814 may detect an open/closed status of the device 800, relative position of components, e.g., the display and the keyboard, of the device 800, a change in position of the device 800 or a component of the device 800, a presence or absence of an user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, in a wire or wireless manner, between the device 800 and other devices. The device 800 may access a wireless network based on a communication standard, such as WiFi, 2G or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-bandwidth (UWB) technology, a Bluetooth (BT) technology, and other technologies.

In exemplary embodiments, the device 800 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there further provides a non-transitory computer readable storage medium including instructions, such as included in the memory 804, executable by the processor 820 in the device 800, for performing the above described methods. For example, the non-transitory computer-readable storage medium may be a ROM, a random access memory (RAM), a CD-ROM, a magnetic tape, a floppy disc, an optical data storage device and the like.

A non-transitory computer readable storage medium, when instructions in the storage medium are executed by a processor of the device 800, the device 800 for upgrading is enabled to perform a method for upgrading, including:
detecting whether an application in a first router apparatus of the at least two router apparatuses needs to be upgraded;
when the application in the first router apparatus needs to be upgraded, acquiring an upgrade file necessary for the application to be upgraded through a communication link between a second router apparatus of the at least two router apparatuses and the server; and
sending the upgrade file to the first router apparatus, such that the first router apparatus upgrades the application by using the upgrade file.

After considering this description and performing the invention herein, those skilled in the art will easily anticipate other implementation aspects of the present invention. The description and embodiments are only exemplary, and the present invention is defined by the following claims.

It should be understood that the present invention is not limited to precise structures that are described above and shown in the accompanying drawings, and may be modified and changed without departing from the range of the present invention. The scope of the present invention is only defined by the appended claims.

## Claims

1. A method for upgrading, which is applied to a terminal, the terminal communicates with at least two router apparatuses, the terminal interacts with a server through a communication link between any one of the router apparatuses and the server, and the method comprises:
detecting (101), by the terminal, whether an application in a first router apparatus of the at least two router apparatuses needs to be upgraded;
when the application in the first router apparatus needs to be upgraded, acquiring (102), by the terminal, an upgrade file necessary for the application to be upgraded through a communication link between a second router apparatus of the at least two router apparatuses and the server; and
sending (103), by the terminal, the upgrade file to the first router apparatus, such that the first router apparatus upgrades the application by using the upgrade file.

2. The method according to claim 1, **characterized in that**, the detecting whether the application in the first router apparatus of the at least two router apparatuses needs to be upgraded comprises:
acquiring (201) a current version identifier of the application, wherein the version identifier comprises at least a version number and/or version generation time;
sending (202) the current version identifier to the server through the communication link between any one of the router apparatuses and the server;
receiving (203) a looking up result sent after the server looks up whether a version to be upgraded exists according to the current version identifier; and
when the looking up result is that the version to be upgraded exists, determining (205) that the application needs to be upgraded, and when the looking up result is that the version to be upgraded does not exist, determining (206) that the application does not need to be upgraded;
or
acquiring (301) a current version identifier of the application, wherein the version identifier comprises at least a version number and/or version generation time;
acquiring (302) a version identifier of the version to be upgraded of the application according to the current version identifier;
comparing (303) the version identifier of the version to be upgraded with the current version identifier; and
when the version identifier of the version to be upgraded is higher than the current version identifier, determining that the application needs to be upgraded; and when the version identifier of the version to be upgraded is lower than or equal to the current version identifier, determining that the application does not need to be upgraded.

3. The method according to claim 2, **characterized in that**, the acquiring the version identifier of the version to be upgraded of the application according to the current version identifier comprises:
sending the current version identifier to the server through the communication link between any one of the router apparatuses and the server; and
receiving the version identifier of the version to be upgraded which corresponds to the application, sent from the server and looked up according to the current version identifier.

4. The method according to any one of claims 1 to3, **characterized in that**, the acquiring the upgrade file necessary for the application in the first router apparatus to be upgraded through the communication link between the second router apparatus of the at least two router apparatuses and the server comprises:
detecting (401) whether the terminal interacts with the server through the communication link between the second router apparatus and the server;
when the terminal interacts with the server, generating (402) an acquiring request for acquiring the upgrade file necessary for the application to be upgraded;
sending (403) the acquiring request to the server through the communication link between the second router apparatus and the server; and
receiving (404) the upgrade file sent from the server according to the acquiring request.

5. The method according to any one of claims 1 to 4, **characterized in that**, the method further comprises:
detecting whether the terminal interacts with the server through a communication link between the first router apparatus and the server; and
when the terminal interacts with the server, performing the step of sending the upgrade file to the first router apparatus.

6. The method according to any one of claims 1 to 5, **characterized in that**, the method further comprises:
generating an initiating upgrade prompt according to the upgrade file;
determining whether an upgrade operation which is input according to the initiating upgrade prompt is received; and
when the upgrade operation is received, performing the step of sending the upgrade file to the first router apparatus.

7. The method according to any one of claims 1 to 6, **characterized in that**, the method further comprises:
determining whether the application is successfully upgraded;
when the application is successfully upgraded, generating a successful upgrade prompt; and
presenting the successful upgrade prompt;
presenting the successful upgrade prompt comprises:
displaying the successful upgrade prompt in a local display interface of the terminal; or
pushing the successful upgrade prompt to a preset terminal, such that the successful upgrade prompt is displayed on the preset terminal.

8. A terminal for upgrading, the terminal communicates with at least two router apparatuses, the terminal interacts with a server through a communication link between any one of the router apparatuses and the server, and the terminal comprises:
a first detection module (21) configured to detect whether an application in a first router apparatus of the at least two router apparatuses needs to be upgraded;
an acquiring module (22) configured to, when the application in the first router apparatus needs to be upgraded, acquire an upgrade file necessary for the application to be upgraded through a communication link between a second router apparatus of the at least two router apparatuses and the server; and
a sending module (23) configured to send the upgrade file to the first router apparatus, such that the first router apparatus upgrades the application by using the upgrade file.

9. The terminal according to claim 8, **characterized in that**, the first detection module (21) comprises:
a first acquiring unit, configured to acquire a current version identifier of the application, wherein the version identifier comprises at least a version number and/or version generation time;
a first sending unit, configured to send the current version identifier to the server through the communication link between any one of the router apparatuses and the server;
a first receiving unit, configured to receive a looking up result sent after the server looks up whether a version to be upgraded exists according to the current version identifier; and
a first determination unit, configured to, when the looking up result is that the version to be upgraded exists, determine that the application needs to be upgraded, and when the looking up result is that the version to be upgraded does not exist, determine that the application does not need to be upgraded;
or
the first detection module comprises:
a second acquiring unit, configured to acquire a current version identifier of the application, wherein the version identifier comprises at least a version number and/or version generation time;
a third acquiring unit, configured to acquire a version identifier of the version to be upgraded of the application according to the current version identifier;
a comparison unit, configured to compare the version identifier of the version to be upgraded with the current version identifier; and
a second determination unit, configured to, when the version identifier of the version to be upgraded is higher than the current version identifier, determine that the application needs to be upgraded; and when the version identifier of the version to be upgraded is lower than or equal to the current version identifier, determine that the application does not need to be upgraded.

10. The terminal according to claim 9, **characterized in that**, the acquiring module (22) comprises:
a detection unit, configured to detect whether the terminal interacts with the server through the communication link between the second router apparatus and the server;
a generation unit, configured to, when the terminal interacts with the server, generate an acquiring request for acquiring the upgrade file necessary for the application to be upgraded;
a second sending unit, configured to send the acquiring request to the server through the communication link between the second router apparatus and the server; and
a second receiving unit, configured to receive the upgrade file sent from the server according to the acquiring request.

11. The terminal according to any one of claims 8 to 10,, **characterized in that**, the terminal further comprises:
a second detection module, configured to detect whether the terminal interacts with the server through a communication link between the first router apparatus and the server,
wherein the sending module is further configured to, when the terminal interacts with the server, send the upgrade file to the first router apparatus.

12. The terminal according to any one of claims 8 to 11, **characterized in that**, the terminal further comprises:
a first generation module, configured to generate an initiating upgrade prompt according to the upgrade file; and
a first determination module, configured to determine whether an upgrade operation which is input according to the initiating upgrade prompt is received,
wherein the sending module is further configured to, when the upgrade operation is received, perform the step of sending the upgrade file to the first router apparatus.

13. The terminal according to any one of claims 8 to 12, **characterized in that**, the terminal further comprises:
a second determination module, configured to determine whether the application is successfully upgraded;
a second generation module, configured to, when the application is successfully upgraded, generate a successful upgrade prompt; and
a presenting module, configured to present the successful upgrade prompt;
the presenting module comprises:
a presenting unit, configured to display the successful upgrade prompt in a local display interface of the terminal; and
a pushing unit, configured to push the successful upgrade prompt to a preset terminal, such that the successful upgrade prompt is displayed on the preset terminal.

14. A computer program, which when executed on a processor of a terminal for upgrading, performs a method according to any one of claims 1-6.

## Patentansprüche

1. Verfahren zum Verbessern, welches auf ein Endgerät angewendet wird, wobei das Endgerät mit mindestens zwei Router-Einrichtungen kommuniziert, das Endgerät mit einem Server durch eine Kommunikationsverknüpfung zwischen einer beliebigen der Router-Einrichtungen und dem Server interagiert und das Verfahren umfasst:
Detektieren (101), durch das Endgerät, ob eine Anwendung in einer ersten Router-Einrichtung der mindestens zwei Router-Einrichtungen verbessert werden muss,
wenn die Anwendung in der ersten Router-Einrichtung verbessert werden muss, Erlangen (102), durch das Endgerät, einer Verbesserungsdatei, die zum Verbessern der Anwendung notwendig ist, durch eine Kommunikationsverknüpfung zwischen einer zweiten Router-Einrichtung der mindestens zwei Router-Einrichtungen und dem Server, und
Senden (103), durch das Endgerät, der Verbesserungsdatei an die erste Router-Einrichtung, sodass die erste Router-Einrichtung die Anwendung unter Verwendung der Verbesserungsdatei verbessert.

2. Verfahren nach Anspruch 1, **dadurch gekennzeichnet, dass** das Detektieren, ob die Anwendung in der ersten Router-Einrichtung der mindestens zwei Router-Einrichtungen verbessert werden muss, umfasst:
Erlangen (201) einer aktuellen Versionskennung der Anwendung, wobei die Versionskennung mindestens eine Versionsnummer und/oder eine Versions-Generierungszeit umfasst,
Senden (202) der aktuellen Versionskennung an den Server durch die Kommunikationsverknüpfung zwischen einer beliebigen der Router-Einrichtungen und dem Server,
Empfangen (203) eines Nachschlagergebnisses, das gesendet wird, nachdem der Server nachgeschlagen hat, ob gemäß der aktuellen Versionskennung eine zu verbessernde Version vorhanden ist, und
wenn das Nachschlagergebnis besagt, dass die zu verbessernde Version vorhanden ist, Bestimmen (205), dass die Anwendung verbessert werden muss, und wenn das Nachschlagergebnis besagt, dass eine zu verbessernde Version nicht vorhanden ist, Bestimmen (206), dass die Anwendung nicht verbessert werden muss,
oder
Erlangen (301) einer aktuellen Versionskennung der Anwendung, wobei die Versionskennung mindestens eine Versionsnummer und/oder eine Versions-Generierungszeit umfasst,
Erlangen (302) einer Versionskennung der zu verbessernden Version der Anwendung gemäß der aktuellen Versionskennung,
Vergleichen (303) der Versionskennung der zu verbessernden Version mit der aktuellen Versionskennung, und
wenn die Versionskennung der zu verbessernden Version höher als die verbessert Versionskennung ist, Bestimmen, dass die Anwendung verbessert werden muss, und wenn die Versionskennung der zu verbessernden Version niedriger als die aktuelle Versionskennung ist oder dieser entspricht, Bestimmen, dass die Anwendung nicht verbessert werden muss.

3. Verfahren nach Anspruch 2, **dadurch gekennzeichnet, dass** das Erlangen der Versionskennung der zu verbessernden Version der Anwendung gemäß der aktuellen Versionskennung umfasst:
Senden der aktuellen Versionskennung an den Server durch die Kommunikationsverknüpfung zwischen einer beliebigen der Router-Einrichtungen und dem Server, und
Empfangen der Versionskennung der zu verbessernden Version, die der Anwendung entspricht und die vom Server gesendet und gemäß der aktuellen Versionskennung nachgeschlagen wurde.

4. Verfahren nach einem der Ansprüche 1 bis 3, **dadurch gekennzeichnet, dass** das Erlangen der Verbesserungsdatei, die zum Verbessern der Anwendung in der ersten Router-Einrichtung notwendig ist, durch die Kommunikationsverknüpfung zwischen der zweiten Router-Einrichtung der mindestens zwei Router-Einrichtungen und dem Server umfasst:
Detektieren (401), ob das Endgerät mit dem Server durch die Kommunikationsverknüpfung zwischen der zweiten Router-Einrichtung und dem Server interagiert,
wenn das Endgerät mit dem Server interagiert, Generieren (402) einer Erlangungsanforderung zum Erlangen der Verbesserungsdatei, die zum Verbessern der Anwendung notwendig ist,
Senden (403) der Erlangungsanforderung an den Server durch die Kommunikationsverknüpfung zwischen der zweiten Router-Einrichtung und dem Server, und
Empfangen (404) der Verbesserungsdatei, die gemäß der Erlangungsanforderung vom Server gesendet wird.

5. Verfahren nach einem der Ansprüche 1 bis 4, **dadurch gekennzeichnet, dass** das Verfahren ferner umfasst:
Detektieren, ob das Endgerät mit dem Server durch eine Kommunikationsverknüpfung zwischen der ersten Router-Einrichtung und dem Server interagiert, und
wenn das Endgerät mit dem Server interagiert, Durchführen des Schritts des Sendens der Verbesserungsdatei an die erste Router-Einrichtung.

6. Verfahren nach einem der Ansprüche 1 bis 5, **dadurch gekennzeichnet, dass** das Verfahren ferner umfasst:
Generieren einer Verbesserungseinleitungs-Meldung gemäß der Verbesserungsdatei,
Bestimmen, ob ein Verbesserungsvorgang, der gemäß der Verbesserungseinleitungs-Meldung eingegeben wird, empfangen wird, und
wenn der Verbesserungsvorgang empfangen wird, Durchführen des Schritts des Sendens der Verbesserungsdatei an die erste Router-Einrichtung.

7. Verfahren nach einem der Ansprüche 1 bis 6, **dadurch gekennzeichnet, dass** das Verfahren ferner umfasst:
Bestimmen, ob die Anwendung erfolgreich verbessert wird,
wenn die Anwendung erfolgreich verbessert wird, Generieren einer Verbesserung-erfolgreich-Meldung, und
Präsentieren der Verbesserung-erfolgreich-Meldung,
wobei Präsentieren der Verbesserung-erfolgreich-Meldung umfasst:
Anzeigen der Verbesserung-erfolgreich-Meldung auf einer lokalen Anzeigeschnittstelle des Endgeräts, oder
Bereitstellen der Verbesserung-erfolgreich-Meldung für ein voreingestelltes Endgerät durch Push, sodass die Verbesserung-erfolgreich-Meldung auf dem voreingestellten Endgerät angezeigt wird.

8. Endgerät zum Verbessern, wobei das Endgerät mit mindestens zwei Router-Einrichtungen kommuniziert, das Endgerät mit einem Server durch eine Kommunikationsverknüpfung zwischen einer beliebigen der Router-Einrichtungen und dem Server interagiert und das Endgerät umfasst:
ein erstes Detektionsmodul (21), das dazu ausgestaltet ist, zu detektieren, ob eine Anwendung in einer ersten Router-Einrichtung der mindestens zwei Router-Einrichtungen verbessert werden muss,
ein Erlangungsmodul (22), das dazu ausgestaltet ist, wenn die Anwendung in der ersten Router-Einrichtung verbessert werden muss, eine Verbesserungsdatei, die zum Verbessern der Anwendung notwendig ist, durch eine Kommunikationsverknüpfung zwischen einer zweiten Router-Einrichtung der mindestens zwei Router-Einrichtungen und dem Server zu erlangen, und
ein Sendemodul (23), das dazu ausgestaltet ist, die Verbesserungsdatei an die erste Router-Einrichtung zu senden, sodass die erste Router-Einrichtung die Anwendung unter Verwendung der Verbesserungsdatei verbessert.

9. Endgerät nach Anspruch 8, **dadurch gekennzeichnet, dass** das erste Detektionsmodul (21) umfasst:
eine erste Erlangungseinheit, die dazu ausgestaltet ist, eine aktuelle Versionskennung der Anwendung zu erlangen, wobei die Versionskennung mindestens eine Versionsnummer und/oder eine Versions-Generierungszeit umfasst,
eine erste Sendeeinheit, die dazu ausgestaltet ist, die aktuelle Versionskennung an den Server durch die Kommunikationsverknüpfung zwischen einer beliebigen der Router-Einrichtungen und dem Server zu senden,
eine erste Empfangseinheit, die dazu ausgestaltet ist, ein Nachschlagergebnis, zu empfangen, das gesendet wird, nachdem der Server gemäß der aktuellen Versionskennung nachschlägt, ob eine zu verbessernde Version vorhanden ist, und
eine erste Bestimmungseinheit, die dazu ausgestaltet ist, wenn das Nachschlagergebnis besagt, dass die zu verbessernde Version vorhanden ist, zu bestimmen, dass die Anwendung verbessert werden muss, und wenn das Nachschlagergebnis besagt, dass die zu verbessernde Version nicht vorhanden ist, zu bestimmen, dass die Anwendung nicht verbessert werden muss,
oder
das erste Detektionsmodul umfasst:
eine zweite Erlangungseinheit, die dazu ausgestaltet ist, eine aktuelle Versionskennung der Anwendung zu erlangen, wobei die Versionskennung mindestens eine Versionsnummer und/oder eine Versions-Generierungszeit umfasst,
eine dritte Erlangungseinheit, die dazu ausgestaltet ist, eine Versionskennung der zu verbessernden Version der Anwendung gemäß der aktuellen Versionskennung zu erlangen,
eine Vergleichseinheit, die dazu ausgestaltet ist, die Versionskennung der zu verbessernden Version mit der aktuellen Versionskennung zu vergleichen, und
eine zweite Bestimmungseinheit, die dazu ausgestaltet ist, wenn die Versionskennung der zu verbessernden Version höher als die aktuelle Versionskennung ist, zu bestimmen, dass die Anwendung verbessert werden muss, und wenn die Versionskennung der zu verbessernden Version niedriger als die aktuelle Versionskennung ist oder dieser entspricht, zu bestimmen, dass die Anwendung nicht verbessert werden muss.

10. Endgerät nach Anspruch 9, **dadurch gekennzeichnet, dass** das Erlangungsmodul (22) umfasst:
eine Detektionseinheit, die dazu ausgestaltet ist, zu detektieren, ob das Endgerät mit dem Server durch die Kommunikationsverknüpfung zwischen der zweiten Router-Einrichtung und dem Server interagiert,
eine Generierungseinheit, die dazu ausgestaltet ist, wenn das Endgerät mit dem Server interagiert, eine Erlangungsanforderung zum Erlangen der Verbesserungsdatei, die zum Verbessern der Anwendung notwendig ist, zu generieren,
eine zweite Sendeeinheit, die dazu ausgestaltet ist, die Erlangungsanforderung an den Server durch die Kommunikationsverknüpfung zwischen der zweiten Router-Einrichtung und dem Server zu senden, und
eine zweite Empfangseinheit, die dazu ausgestaltet ist, die Verbesserungsdatei zu empfangen, die gemäß der Erlangungsanforderung vom Server gesendet wird.

11. Endgerät nach einem der Ansprüche 8 bis 10, **dadurch gekennzeichnet, dass** das Endgerät ferner umfasst:
ein zweites Detektionsmodul, das dazu ausgestaltet ist, zu detektieren, ob das Endgerät mit dem Server durch eine Kommunikationsverknüpfung zwischen der ersten Router-Einrichtung und dem Server interagiert,
wobei das Sendemodul ferner dazu ausgestaltet ist, wenn das Endgerät mit dem Server interagiert, die Verbesserungsdatei an die erste Router-Einrichtung zu senden.

12. Endgerät nach einem der Ansprüche 8 bis 11, **dadurch gekennzeichnet, dass** das Endgerät ferner umfasst:
ein erstes Generierungsmodul, das dazu ausgestaltet ist, eine Verbesserungseinleitungs-Meldung gemäß der Verbesserungsdatei zu generieren, und
ein erstes Bestimmungsmodul, das dazu ausgestaltet, zu bestimmen, ob ein Verbesserungsvorgang, der gemäß der Verbesserungseinleitungs-Meldung eingegeben wird, empfangen wird,
wobei das Sendemodul ferner dazu ausgestaltet ist, wenn der Verbesserungsvorgang empfangen wird, den Schritt des Sendens der Verbesserungsdatei an die erste Router-Einrichtung durchzuführen.

13. Endgerät nach einem der Ansprüche 8 bis 12, **dadurch gekennzeichnet, dass** das Endgerät ferner umfasst:
ein zweites Bestimmungsmodul, das dazu ausgestaltet ist, zu bestimmen, ob die Anwendung erfolgreich verbessert wird,
ein zweites Generierungsmodul, das dazu ausgestaltet ist, wenn die Anwendung erfolgreich verbessert wird, eine Verbesserung-erfolgreich-Meldung zu generieren, und
ein Präsentationsmodul, das dazu ausgestaltet ist, die Verbesserung-erfolgreich-Meldung zu präsentieren,
wobei das Präsentationsmodul umfasst:
eine Präsentationseinheit, die dazu ausgestaltet ist, die Verbesserung-erfolgreich-Meldung auf einer lokalen Anzeigeschnittstelle des Endgeräts anzuzeigen, und
eine Push-Einheit, die dazu ausgestaltet ist, die Verbesserung-erfolgreich-Meldung für ein voreingestelltes Endgerät durch Push bereitzustellen, sodass die Verbesserung-erfolgreich-Meldung auf dem voreingestellten Endgerät angezeigt wird.

14. Computerprogramm, das bei Ausführung auf einem Prozessor eines Endgeräts zum Verbessern ein Verfahren nach einem der Ansprüche 1-6 durchführt.

## Revendications

1. Procédé de mise à niveau, qui est appliqué à un terminal, dans lequel le terminal communique avec au moins deux appareils routeurs, le terminal interagit avec un serveur par le biais d'une liaison de communication entre l'un quelconque des appareils routeurs et le serveur, et le procédé comprend les étapes ci-dessous consistant à :
détecter (101), par le biais du terminal, si une application dans un premier appareil routeur desdits au moins deux appareils routeurs doit être mise à niveau ;
lorsque l'application dans le premier appareil routeur doit être mise à niveau, acquérir (102), par le biais du terminal, un fichier de mise à niveau nécessaire pour que l'application soit mise à niveau par le biais d'une liaison de communication entre un second appareil routeur desdits au moins deux appareils routeurs et le serveur ; et
envoyer (103), par le biais du terminal, le fichier de mise à niveau, au premier appareil routeur, de sorte que le premier appareil routeur met à niveau l'application en utilisant le fichier de mise à niveau.

2. Procédé selon la revendication 1, **caractérisé en ce que** l'étape consistant à détecter si l'application, dans le premier appareil routeur desdits au moins deux appareils routeurs, doit être mise à niveau, comprend les étapes ci-dessous consistant à :
acquérir (201) un identificateur de version en cours de l'application, dans lequel l'identificateur de version comprend au moins un numéro de version et/ou un temps de génération de version ;
envoyer (202) l'identificateur de version en cours au serveur par le biais de la liaison de communication entre l'un quelconque des appareils routeurs et le serveur ;
recevoir (203) un résultat de recherche envoyé après que le serveur recherche si une version à mettre à niveau existe selon l'identificateur de version en cours ; et
lorsque le résultat de recherche indique que la version à mettre à niveau existe, déterminer (205) que l'application doit être mise à niveau, et lorsque le résultat de recherche indique que la version à mettre à niveau n'existe pas, déterminer (206) que l'application ne doit pas être mise à niveau ; ou
acquérir (301) un identificateur de version en cours de l'application, dans lequel l'identificateur de version comprend au moins un numéro de version et/ou un temps de génération de version ;
acquérir (302) un identificateur de version de la version à mettre à niveau de l'application selon l'identificateur de version en cours ;
comparer (303) l'identificateur de version de la version à mettre à niveau à l'identificateur de version en cours ; et
lorsque l'identificateur de version de la version à mettre à niveau est supérieur à l'identificateur de version en cours, déterminer que l'application doit être mise à niveau ; et lorsque l'identificateur de version de la version à mettre à niveau est inférieur ou égal à l'identificateur de version en cours, déterminer que l'application ne doit pas être mise à niveau.

3. Procédé selon la revendication 2, **caractérisé en ce que** l'étape d'acquisition de l'identificateur de version de la version à mettre à niveau de l'application selon l'identificateur de version en cours comprend les étapes ci-dessous consistant à :
envoyer l'identificateur de version en cours au serveur par le biais de la liaison de communication entre l'un quelconque des appareils routeurs et le serveur ; et
recevoir l'identificateur de version de la version à mettre à niveau qui correspond à l'application, envoyé à partir du serveur et recherché selon l'identificateur de version en cours.

4. Procédé selon l'une quelconque des revendications 1 à 3, **caractérisé en ce que** l'étape d'acquisition du fichier de mise à niveau nécessaire pour que l'application dans le premier appareil routeur soit mise à niveau par le biais de la liaison de communication entre le second appareil routeur desdits au moins deux appareils routeurs et le serveur, comprend les étapes ci-dessous consistant à :
détecter (401) si le terminal interagit avec le serveur par le biais de la liaison de communication entre le second appareil routeur et le serveur ;
lorsque le terminal interagit avec le serveur, générer (402) une demande d'acquisition pour acquérir le fichier de mise à niveau nécessaire pour que l'application soit mise à niveau ;
envoyer (403) la demande d'acquisition au serveur par le biais de la liaison de communication entre le second appareil routeur et le serveur ; et
recevoir (404) le fichier de mise à niveau envoyé à partir du serveur selon la demande d'acquisition.

5. Procédé selon l'une quelconque des revendications 1 à 4, **caractérisé en ce que** le procédé comprend en outre les étapes ci-dessous consistant à :
détecter si le terminal interagit avec le serveur par le biais d'une liaison de communication entre le premier appareil routeur et le serveur ; et
lorsque le terminal interagit avec le serveur, mettre en oeuvre l'étape d'envoi du fichier de mise à niveau au premier appareil routeur.

6. Procédé selon l'une quelconque des revendications 1 à 5, **caractérisé en ce que** le procédé comprend en outre les étapes ci-dessous consistant à :
générer une invite d'initiation de mise à niveau selon le fichier de mise à niveau ;
déterminer si une opération de mise à niveau qui est appliquée en entrée selon l'invite d'initiation de mise à niveau est reçue ; et
lorsque l'opération de mise à niveau est reçue, mettre en oeuvre l'étape d'envoi du fichier de mise à niveau au premier appareil routeur.

7. Procédé selon l'une quelconque des revendications 1 à 6, **caractérisé en ce que** le procédé comprend en outre les étapes ci-dessous consistant à :
déterminer si l'application a été mise à niveau correctement ;
lorsque l'application a été mise à niveau correctement, générer une invite de mise à niveau réussie ; et
présenter l'invite de mise à niveau réussie ;
dans lequel l'étape de présentation de l'invite de mise à niveau réussie comprend l'étape ci-dessous consistant à :
afficher l'invite de mise à niveau réussie dans une interface d'affichage locale du terminal ; ou
pousser l'invite de mise à niveau réussie vers un terminal prédéfini, de sorte que l'invite de mise à niveau réussie est affichée sur le terminal prédéfini.

8. Terminal pour une mise à niveau, dans lequel le terminal communique avec au moins deux appareils routeurs, le terminal interagit avec un serveur par le biais d'une liaison de communication entre l'un quelconque des appareils routeurs et le serveur, et le terminal comprend :
un premier module de détection (21) configuré de manière à détecter si une application dans un premier appareil routeur desdits au moins deux appareils routeurs doit être mise à niveau ;
un module d'acquisition (22) configuré de manière à, lorsque l'application dans le premier appareil routeur doit être mise à niveau, acquérir un fichier de mise à niveau nécessaire pour que l'application soit mise à niveau, par le biais d'une liaison de communication entre un second appareil routeur desdits au moins deux appareils routeurs et le serveur ; et
un module d'envoi (23) configuré de manière à envoyer le fichier de mise à niveau au premier appareil routeur, de sorte que le premier appareil routeur met à niveau l'application en utilisant le fichier de mise à niveau.

9. Terminal selon la revendication 8, **caractérisé en ce que** le premier module de détection (21) comprend :
une première unité d'acquisition, configurée de manière à acquérir un identificateur de version en cours de l'application, dans lequel l'identificateur de version comprend au moins un numéro de version et/ou un temps de génération de version ;
une première unité d'envoi, configurée de manière à envoyer l'identificateur de version en cours au serveur par le biais de la liaison de communication entre l'un quelconque des appareils routeurs et le serveur ;
une première unité de réception, configurée de manière à recevoir un résultat de recherche envoyé après que le serveur recherche si une version à mettre à niveau existe selon l'identificateur de version en cours ; et
une première unité de détermination, configurée de manière à, lorsque le résultat de recherche indique que la version à mettre à niveau existe, déterminer que l'application doit être mise à niveau, et lorsque le résultat de recherche indique que la version à mettre à niveau n'existe pas, déterminer que l'application ne doit pas être mise à niveau ; ou
le premier module de détection comprend :
une deuxième unité d'acquisition, configurée de manière à acquérir un identificateur de version en cours de l'application, dans lequel l'identificateur de version comprend au moins un numéro de version et/ou un temps de génération de version ;
une troisième unité d'acquisition, configurée de manière à acquérir un identificateur de version de la version à mettre à niveau de l'application selon l'identificateur de version en cours ;
une unité de comparaison, configurée de manière à comparer l'identificateur de version de la version à mettre à niveau à l'identificateur de version en cours ; et
une seconde unité de détermination, configurée de manière à, lorsque l'identificateur de version de la version à mettre à niveau est supérieur à l'identificateur de version en cours, déterminer que l'application doit être mise à niveau ; et lorsque l'identificateur de version de la version à mettre à niveau est inférieur ou égal à l'identificateur de version en cours, déterminer que l'application ne doit pas être mise à niveau.

10. Terminal selon la revendication 9, **caractérisé en ce que** le module d'acquisition (22) comprend :
une unité de détection, configurée de manière à détecter si le terminal interagit avec le serveur par le biais de la liaison de communication entre le second appareil routeur et le serveur ;
une unité de génération, configurée de manière à, lorsque le terminal interagit avec le serveur, générer une demande d'acquisition en vue d'acquérir le fichier de mise à niveau nécessaire pour que l'application soit mise à niveau ;
une seconde unité d'envoi, configurée de manière à envoyer la demande d'acquisition au serveur par le biais de la liaison de communication entre le second appareil routeur et le serveur ; et
une seconde unité de réception, configurée de manière à recevoir le fichier de mise à niveau envoyé par le serveur selon la demande d'acquisition.

11. Terminal selon l'une quelconque des revendications 8 à 10, **caractérisé en ce que**, le terminal comprend en outre :
un second module de détection, configuré de manière à détecter si le terminal interagit avec le serveur par le biais d'une liaison de communication entre le premier appareil routeur et le serveur ;
dans lequel le module d'envoi est en outre configuré de manière à, lorsque le terminal interagit avec le serveur, envoyer le fichier de mise à niveau au premier appareil routeur.

12. Terminal selon l'une quelconque des revendications 8 à 11, **caractérisé en ce que**, le terminal comprend en outre :
un premier module de génération, configuré de manière à générer une invite d'initiation de mise à niveau selon le fichier de mise à niveau ; et
un premier module de détermination, configuré de manière à déterminer si une opération de mise à niveau qui est appliquée en entrée selon l'invite d'initiation de mise à niveau est reçue ;
dans lequel le module d'envoi est en outre configuré de manière à, lorsque l'opération de mise à niveau est reçue, mettre en oeuvre l'étape d'envoi du fichier de mise à niveau au premier appareil routeur.

13. Terminal selon l'une quelconque des revendications 8 à 12, **caractérisé en ce que**, le terminal comprend en outre :
un second module de détermination, configuré de manière à déterminer si l'application est mise à niveau correctement ;
un second module de génération, configuré de manière à, lorsque l'application est mise à niveau correctement, générer une invite de mise à niveau réussie ; et
un module de présentation, configuré de manière à présenter l'invite de mise à niveau réussie ;
dans lequel le module de présentation comprend :
une unité de présentation, configurée de manière à afficher l'invite de mise à niveau réussie dans une interface d'affichage locale du terminal ; et
une unité de poussée, configurée de manière à pousser l'invite d'initiation de mise à niveau vers un terminal prédéfini, de sorte que l'invite de mise à niveau réussie est affichée sur le terminal prédéfini.

14. Programme informatique qui, lorsqu'il est exécuté sur un processeur d'un terminal pour une mise à niveau, met en oeuvre un procédé selon l'une quelconque des revendications 1 à 6.
